# EUROPÄISCHE PATENTANMELDUNG

(11) **EP 3 096 158 A1**
(43) Veröffentlichungstag der Anmeldung: **23.11.2016**
(21) Anmeldenummer: 15167963.6
(22) Anmeldetag: 18.05.2015
(51) Int. Cl.: G01S 7/481, G01S 17/08

(54) **VORRICHTUNG ZUR OPTISCHEN DISTANZMESSUNG ZU EINEM REFLEKTIERENDEN ZIELOBJEKT**

(71) Anmelder: HILTI Aktiengesellschaft, 9494 Schaan (LI)
(72) Erfinder: Gogolla, Torsten, 9494 Schaan (LI); Winter, Andreas, 6800 Feldkirch (AT)
(74) Vertreter: Hilti Aktiengesellschaft Corporate Intellectual Property

(57) **Zusammenfassung**

Vorrichtung zur optischen Distanzmessung zu einem reflektierenden Zielobjekt aufweisend eine Strahlquelle, einen Detektor, ein Strahlformungssystem mit einer Sendeoptik und einer Empfangsoptik und ein Laserstrahlformungselement, das in den Strahlengang des Laserstrahls anordbar ist. Das Laserstrahlformungselement ist als Sendeblendenanordnung mit einem ersten Array (71) von Sendepixeln (72ᵢⱼ) ausgebildet, wobei die Sendepixel (72ᵢⱼ) mittels einer ersten Steuereinheit (73) zwischen einem für den Laserstrahl undurchlässigen Sendezustand (TSᵢⱼ < 10 %) und einem für den Laserstrahl zumindest teildurchlässigen Sendezustand (10% ≤ TSᵢⱼ ≤ 100 %) schaltbar sind.

## Beschreibung

### Technisches Gebiet

Die vorliegende Erfindung betrifft eine Vorrichtung zur optischen Distanzmessung zu einem reflektierenden Zielobjekt gemäß dem Oberbegriff des Anspruchs 1.

### Stand der Technik

DE 197 27 988 A1 offenbart eine bekannte Vorrichtung zur optischen Distanzmessung zu einem reflektierenden Zielobjekt bestehend aus einem Teleskop, einer Distanzmesseinrichtung und einer Anpasseinrichtung zum Anpassen der Laserstrahldivergenz. Die Distanzmesseinrichtung umfasst eine Strahlquelle, die einen Laserstrahl aussendet, einen Detektor, der einen am Zielobjekt reflektierten Empfangsstrahl empfängt, und ein Strahlformungssystem mit einer Sendeoptik zur Strahlformung des Laserstrahls und einer Empfangsoptik zur Strahlformung des Empfangsstrahls. Die Laserstrahldivergenz kann über den Austrittswinkel des Laserstrahls an der Strahlquelle, über die optische Weglänge zwischen der Strahlquelle und der Sendeoptik oder durch eine zusätzliche Sendeoptik hinter der Strahlquelle verändert werden. Nachteilig ist, dass alle vorgeschlagenen Maßnahmen zum Anpassen der Laserstrahldivergenz innerhalb der Distanzmesseinrichtung erfolgen und die Stabilität der Distanzmesseinrichtung reduzieren.

Aus DE 198 40 049 A1 ist eine Vorrichtung zur optischen Distanzmessung zu einem reflektierenden Zielobjekt bekannt. Die Vorrichtung umfasst eine Distanzmesseinrichtung und eine Anpasseinrichtung zum Anpassen des Laserstrahls an das Zielobjekt. Die Distanzmesseinrichtung umfasst eine oder zwei Strahlquellen, einen Detektor und ein Strahlformungssystem mit einer Sendeoptik und einer Empfangsoptik. Die eine oder zwei Strahlquellen erzeugen einen ersten Laserstrahl mit einer großen Strahldivergenz und einen zweiten Laserstrahl mit einer geringen Strahldivergenz, wobei der erste Laserstrahl zur Distanzmessung zu streuenden Zielobjekten und der zweite Laserstrahl zur Distanzmessung zu reflektierenden Zielobjekten vorgesehen sind.

Die Auswahl eines geeigneten Laserstrahls kann an den Strahlquellen oder am Detektor erfolgen. In einer Ausführungsform werden der erste und zweite Laserstrahl gleichzeitig ausgesandt und treffen auf das Zielobjekt. Im Strahlengang des Empfangsstrahls sind vor dem Detektor optische Filter angeordnet, die nur den ersten oder zweiten Laserstrahl hindurch lassen. Die optischen Filter sind in einem manuell bedienbaren oder motorisch angetriebenen Filterrad oder Filterschieber angeordnet, die einzelne optische Filter in den Strahlengang des Empfangsstrahls einbringen. Nachteilig ist, dass zwei Laserstrahlen mit unterschiedlichen Strahldivergenzen erforderlich sind, um die Distanzmessung an das Zielobjekt anzupassen. Um die unterschiedlichen Strahldivergenzen zu erzeugen, sind mehrere Strahlengänge und Strahlformungsoptiken erforderlich, die den Platzbedarf erhöhen.

DE 10 2013 205 589 A1 offenbart eine weitere bekannte Vorrichtung zur optischen Distanzmessung zu einem reflektierenden Zielobjekt bestehend aus einer Distanzmesseinrichtung und einer Anpasseinrichtung, die außerhalb der Distanzmesseinrichtung angeordnet ist. Die Distanzmesseinrichtung umfasst eine Strahlquelle, einen Detektor und ein Strahlformungssystem mit einer Sendeoptik und einer Empfangsoptik. Die Anpasseinrichtung umfasst mindestens ein Laserstrahlformungselement, das in den Strahlengang des Laserstrahls anordbar ist und das als Zerstreuungsoptik ausgebildet ist. Um den Laserstrahl an unterschiedliche Entfernungsbereiche von reflektierenden Zielobjekten anpassen zu können, sind mehrere, als Zerstreuungsoptiken ausgebildete, Laserstrahlformungselemente vorgesehen, die sich in den zerstreuenden Eigenschaften voneinander unterscheiden. In einer Weiterentwicklung umfasst die Anpasseinrichtung mindestens ein Empfangsstrahlformungselement, das in den Strahlengang des Empfangsstrahls anordbar ist und das als Streuscheibe ausgebildet ist. Mit Hilfe der Streuscheibe kann der Empfangsstrahl gedämpft werden, um ein Übersteuern des Detektors zu verhindern. Um den Empfangsstrahl an unterschiedliche Entfernungsbereiche von reflektierenden Zielobjekten anpassen zu können, sind mehrere, als Streuscheiben ausgebildete, Empfangsstrahlformungselemente vorgesehen, die sich in den lichtstreuenden Eigenschaften voneinander unterscheiden.

Die bekannte Vorrichtung zur optischen Distanzmessung zu einem reflektierenden Zielobjekt weist den Nachteil auf, dass Fremdlicht, beispielsweise in Form von direkt oder indirekt einfallendem Sonnenlicht, den Messfehler bei der Distanzmessung mit einer festen Messzeit erhöht und dadurch die Genauigkeit der Messergebnisse verschlechtern kann oder die für die Distanzmessung erforderliche Messzeit erhöht. Fremdlicht ist im Gegensatz zum Laserstrahl nicht gerichtet, sondern kann aus unterschiedlichen Richtungen einfallen. Die als Streuscheiben ausgebildeten Empfangsstrahlformungselemente dämpfen Fremdlicht sehr viel schwächer als den gerichteten Empfangsstrahl. Beim Einsatz von Flächenretroreflektoren weist die bekannte Vorrichtung zur optischen Distanzmessung aufgrund der Strahlaufweitung durch die Zerstreuungsoptik weitere Nachteile auf. Ist der Flächenretroreflektor nicht senkrecht zur optischen Achse des auftreffenden Laserstrahls angeordnet, wird die minimale Distanz nicht auf der optischen Achse des Laserstrahls gemessen und die von der Distanzmesseinrichtung gemessene Distanz weist eine Abweichung zur tatsächlichen Distanz auf. Diese Abweichung nimmt zu, je stärker der Laserstrahl von der Zerstreuungsoptik aufgeweitet wird.

### Darstellung der Erfindung

Die Aufgabe der vorliegenden Erfindung besteht in der Entwicklung einer Vorrichtung zur optischen Distanzmessung zu einem reflektierenden Zielobjekt, die für die Distanzmessung zu Einzelretroreflektoren und zu Flächenretroreflektoren geeignet ist. Außerdem soll Fremdlicht in der Vorrichtung mit geringem apparativem Aufwand gedämpft werden.

Diese Aufgabe wird bei der eingangs genannten Vorrichtung zur optischen Distanzmessung zu einem reflektierenden Zielobjekt erfindungsgemäß durch die Merkmale des unabhängigen Anspruchs 1 gelöst. Vorteilhafte Weiterbildungen sind in den abhängigen Ansprüchen angegeben.

Erfindungsgemäß ist die Vorrichtung zur optischen Distanzmessung zu einem reflektierenden Zielobjekt dadurch gekennzeichnet, dass das Laserstrahlformungselement als Sendeblendenanordnung mit einem ersten Array von Sendepixeln ausgebildet ist, wobei die Sendepixel mittels einer ersten Steuereinheit zwischen einem für den Laserstrahl undurchlässigen Sendezustand und einem für den Laserstrahl zumindest teildurchlässigen Sendezustand schaltbar sind. Ein, als Sendeblendenanordnung mit einem ersten Array von schaltbaren Sendepixeln ausgebildetes, Laserstrahlformungselement eignet sich sowohl für die optische Distanzmessung zu Einzelretroreflektoren als auch für die optische Distanzmessung zu Flächenretroreflektoren. Die Sendepixel des ersten Arrays sind unabhängig voneinander zwischen einem undurchlässigen und einem zumindest teildurchlässigen Sendezustand schaltbar, wobei sich die Durchlässigkeit der Sendepixel zumindest auf den Wellenlängenbereich um die Wellenlänge des Laserstrahls bezieht. Die Durchlässigkeit der Sendepixel wird über den Transmissionsgrad angegeben, der als Verhältnis der durchgelassenen Strahlungsleistung zur auftreffenden Strahlungsleistung definiert ist.

Über den Transmissionsgrad der einzelnen Sendepixel des ersten Arrays kann der Laserstrahl an den Typ des Zielobjektes (streuendes Zielobjekt, Einzelretroreflektor oder Flächenretroreflektor) angepasst werden. Bei Zielobjekten wird zwischen streuenden Zielobjekten und reflektierenden Zielobjekten unterschieden, wobei reflektierende Zielobjekte nochmal zwischen Einzelretroreflektoren und Flächenretroreflektoren unterschieden werden. Als Einzelretroreflektoren sind reflektierende Zielobjekte definiert, die aus einem Tripelprisma bestehen, wobei die Abmessungen des Prismas grösser als die typischen Laserstrahldurchmesser sind und ein auftreffender Laserstrahl eine Fläche des Tripelprismas erfasst. Beispiele für Einzelretroreflektoren sind Tripelprismen mit Durchmessern von 25 mm oder 50 mm. Als Flächenretroreflektoren sind reflektierende Zielobjekte definiert, die aus einer Mehrzahl von Prismen bestehen, die in einer ebenen Fläche nebeneinander angeordnet sind, wobei die Abmessungen der Prismen kleiner als die typischen Laserstrahldurchmesser sind und ein auftreffender Laserstrahl mehrere Prismen erfasst. Beispiele für Flächenretroreflektoren sind Reflexionsfolien und Katzenaugen.

Die Strahlungsleistung des ausgesandten Laserstrahls ist für die Distanzmessung zu streuenden Zielobjekten ausgelegt. Bei streuenden Zielobjekten wird der Laserstrahl am Zielobjekt über einen großen Winkelbereich gestreut, nur ein geringer Teil der Strahlungsleistung wird von der Empfangsoptik erfasst und an den Detektor weitergeleitet. Bei der Distanzmessung zu reflektierenden Zielobjekten wird der Laserstrahl am Zielobjekt reflektiert und trifft als gerichteter Empfangsstrahl auf den Detektor. Um ein Übersteuern des Detektors bei der Distanzmessung zu reflektierenden Zielobjekten zu verhindern, muss die Strahlungsleistung des auftreffenden Empfangsstrahls deutlich kleiner als die Strahlungsleistung des ausgesandten Laserstrahls sein. Dabei kann die Reduzierung der Strahlungsleistung über Maßnahmen im Strahlengang des Laserstrahls und/oder über Maßnahmen im Strahlengang des Empfangsstrahls erfolgen.

Bei einem Einzelretroreflektor wird durch die erfindungsgemäße Sendeblendenanordnung ein großer Teil des Laserstrahls ausgeblendet und der durchgelassene Teil wird durch Beugung aufgeweitet. Durch die Aufweitung kann die erforderliche Genauigkeit, mit der der Laserstrahl auf den Einzelretroreflektor ausgerichtet werden muss, reduziert werden. Bei Einzelretroreflektoren sollte das Zentrum des Einzelretroreflektors vom Laserstrahl getroffen werden, damit der reflektierte Empfangsstrahl vom Detektor erfasst wird. Wenn der Laserstrahl nicht auf das Zentrum des Einzelretroreflektors trifft, kann der reflektierte Empfangsstrahl durch Parallelversatz die Empfangsoptik und damit den Detektor verfehlen. Bei einem Flächenretroreflektor wird der Laserstrahl durch die erfindungsgemäße Sendeblendenanordnung vor allem im Randbereich geformt und homogenisiert.

Bevorzugt sind die Sendepixel zwischen einem für den Laserstrahl undurchlässigen Sendezustand, einem für den Laserstrahl teildurchlässigen Sendezustand und einem für den Laserstrahl volldurchlässigen Sendezustand schaltbar. Die Form des Laserstrahls hinter der Sendeblendenanordnung lässt sich über den Transmissionsgrad der einzelnen Sendepixel einstellen. Ein undurchlässiges Sendepixel weist einen Transmissionsgrad kleiner als 10 % auf, ein volldurchlässiges Sendepixel einen Transmissionsgrad grösser als 90 % und ein teildurchlässiges Sendepixel einen Transmissionsgrad zwischen 10 % und 90 %. In den Teilen des Laserstrahls, die ausgeblendet werden sollen, werden die Sendepixel in den undurchlässigen Sendezustand geschaltet. In den übrigen Teilen des Laserstrahls werden die Sendepixel in den teildurchlässigen Sendezustand oder den volldurchlässigen Sendezustand geschaltet. Bei teildurchlässigen Sendepixeln lässt sich der Anteil der durchgelassenen Strahlungsleistung über den Transmissionsgrad der Sendepixel verändern. Je kleiner der Transmissionsgrad ist, umso stärker wird der Laserstrahl gedämpft. Der Transmissionsgrad der Sendepixel ist in mehreren diskreten Stufen oder stufenlos zwischen 0 % und 100 % einstellbar. Ein in mehreren diskreten Stufen einstellbarer Transmissionsgrad hat den Vorteil einer schnellen Einstellbarkeit des Transmissionsgrads und eines geringen Elektronikaufwands gegenüber einem stufenlos einstellbaren Transmissionsgrad. Ein stufenlos einstellbarer Transmissionsgrad hat den Vorteil, dass die Durchlässigkeit der Sendepixel sehr genau einstellbar ist.

In einer bevorzugten Weiterentwicklung der erfindungsgemäßen Vorrichtung ist in der ersten Steuereinheit mindestens eine voreingestellte erste Sendepixelanordnung des ersten Arrays vorgesehen, wobei in der ersten Sendepixelanordnung mindestens 50 % der Sendepixel des ersten Arrays, die im Strahlengang des Laserstrahls angeordnet sind, für den Laserstrahl undurchlässig ausgebildet sind. Für die Berechnung des Anteils an Sendepixeln werden nur die Sendepixel des ersten Arrays betrachtet, die zumindest teilweise vom Laserstrahl erfasst sind. Ein erstes Array, bei dem mindestens 50 % der Sendepixel für den Laserstrahl undurchlässig ausgebildet sind, eignet sich für die optische Distanzmessung zu Einzelretroreflektoren. Dadurch, dass mindestens 50 % der Sendepixel undurchlässig sind, wird ein großer Teil des Laserstrahls ausgeblendet. Die Sendepixel, die im Strahlengang des Laserstrahls angeordnet sind und teil- oder volldurchlässig ausgebildet sind, können eine Sendeblende für den Laserstrahl bilden und die gewünschte starke Aufweitung des Laserstrahls erzielen. Dabei werden die Öffnungswinkel des Laserstrahls hinter der Sendeblendenanordnung über die Abmessungen der Sendeblende eingestellt.

Besonders bevorzugt bilden ein Sendepixel oder mehrere benachbarte Sendepixel des ersten Arrays für den Laserstrahl eine Sendeblende, wobei die Sendeblende einen Teilstrahl erzeugt und den Teilstrahl auf einen oder mehrere Öffnungswinkel aufweitet, die nicht kleiner als ein minimaler Grenzwinkel von 1,0 mrad sind. Der minimale Grenzwinkel von 1,0 mrad für die Öffnungswinkel des Laserstrahls ist für die Distanzmessung zu Einzelretroreflektoren definiert und lässt sich in eine maximale Abmessung für die Sendeblende umrechnen. Diese maximale Abmessung für die Sendeblende darf nicht überschritten werden, wenn die Öffnungswinkel des Teilstrahls grösser als der minimale Grenzwinkel von 1,0 mrad sein sollen. Je kleiner die Abmessungen der Sendeblende sind, umso grösser sind die Öffnungswinkel des Teilstrahls im Strahlengang hinter der Sendeblende. Der minimale Grenzwinkel von 1,0 mrad stellt sicher, dass bei der Verwendung von Einzelretroreflektoren eine starke Aufweitung des Laserstrahls erfolgt.

Eine Sendeblende ist charakterisiert durch ihren Flächeninhalt und ihre Abmessungen. Die Blendengeometrie der Sendeblende bestimmt, ob der Teilstrahl einen Öffnungswinkel oder mehrere Öffnungswinkel aufweist. Sendeblenden mit einer quadratischen Blendengeometrie sind durch eine Abmessung (Seitenlänge des Quadrats) definiert und erzeugen hinter der Sendeblende Teilstrahlen, die einen kreisförmigen Strahlquerschnitt mit einem in Umfangsrichtung konstanten Öffnungswinkel aufweisen. Sendeblenden mit einer rechteckigen Blendengeometrie sind durch zwei Abmessungen (kurze und lange Rechteckseite) definiert und erzeugen hinter der Sendeblende Teilstrahlen, die einen elliptischen Strahlquerschnitt mit einem in Umfangsrichtung variierenden Öffnungswinkel aufweisen, wobei der Öffnungswinkel in Umfangsrichtung zwischen einem maximalen Öffnungswinkel auf der großen Halbachse und einem minimalen Öffnungswinkel auf der kleinen Halbachse des elliptischen Strahlquerschnitts variiert. Sendeblenden mit einer beliebigen Blendengeometrie erzeugen hinter der Sendeblende Teilstrahlen mit mehreren Öffnungswinkeln, die zwischen einem minimalen Öffnungswinkel und einem maximalen Öffnungswinkel liegen.

Besonders bevorzugt weist das erste Array mehrere Sendeblenden auf, wobei die Sendeblenden mehrere Teilstrahlen erzeugen und die Teilstrahlen jeweils auf einen oder mehrere Öffnungswinkel aufweiten, die nicht kleiner als der minimale Grenzwinkel von 1,0 mrad sind. Durch die Verwendung von mehreren Sendeblenden kann die erforderliche Genauigkeit bei der Ausrichtung des Laserstrahls auf einen Einzelretroreflektor reduziert werden. Hinter der Sendeblende weist der Teilstrahl zunächst einen kleinen Strahldurchmesser auf, der im Nahbereich von wenigen Metern hinter der Sendeblendenanordnung eine genaue Ausrichtung des Laserstrahls auf den Einzelretroreflektor erforderlich machen würde. Bei mehreren Sendeblenden addieren sich die Durchmesser der Teilstrahlen und vergrößern den Strahldurchmesser. Als Sendeblendenanordnung für die Distanzmessung zu Einzelretroreflektoren eignen sich beispielsweise eine zentrale Sendeblende, die koaxial zur optischen Achse des Laserstrahls vor der Sendeblendenanordnung angeordnet ist, und eine ringförmige Verteilung weiterer Sendeblenden um die zentrale Sendeblende. Die Teilstrahlen, die die mehreren Sendeblenden erzeugen und die sich hinter der Sendeblendenanordnung zu einem Laserstrahl überlagern, sollten die gleichen Öffnungswinkel aufweisen, bevorzugt einen in Umfangsrichtung konstanten Öffnungswinkel. Die Sendeblenden weisen bevorzugt die gleiche Blendengeometrie und die gleichen Abmessungen auf.

Die bei einem Einzelretroreflektor erforderliche Reduzierung der Strahlungsleistung des auftreffenden Empfangsstrahls kann über die Sendeblenden erfolgen. Dabei kann die Strahlungsleistung des Laserstrahls über die Sendefläche der Sendeblendenanordnung und über die Durchlässigkeit der Sendeblenden angepasst werden. Die Sendefläche einer Sendeblendenanordnung ist im Allgemeinen als Summe aus den einzelnen Flächeninhalten der Sendeblenden definiert. Wenn die Sendeblenden die gleichen Abmessungen aufweisen, kann die Sendefläche auch als Produkt aus der Anzahl der Sendeblenden und dem Flächeninhalt der Sendeblenden berechnet werden. Alternativ oder zusätzlich zur Sendefläche kann die Strahlungsleistung des Laserstrahls über die Durchlässigkeit der Sendeblenden angepasst werden. Die Durchlässigkeit der Sendeblenden beeinflusst ausschließlich die Strahlungsleistung des Laserstrahls, wohingegen die Sendefläche, die von den Abmessungen der Sendeblenden abhängt, die Strahlungsleistung und die Öffnungswinkel der Teilstrahlen verändert. Über die Durchlässigkeit der Sendeblenden besteht die Möglichkeit, die Strahlungsleistung des Laserstrahls anzupassen, ohne die Öffnungswinkel der Teilstrahlen zu verändern.

In einer bevorzugten Weiterentwicklung der erfindungsgemäßen Vorrichtung ist in der ersten Steuereinheit mindestens eine voreingestellte zweite Sendepixelanordnung des ersten Arrays vorgesehen, wobei in der zweiten Sendepixelanordnung mindestens 50 % der Sendepixel des ersten Arrays, die im Strahlengang des Laserstrahls angeordnet sind, für den Laserstrahl teil- oder volldurchlässig ausgebildet sind. Für die Berechnung des Anteils an Sendepixeln werden nur die Sendepixel des ersten Arrays betrachtet, die zumindest teilweise vom Laserstrahl erfasst sind. Ein erstes Array, bei dem mindestens 50 % der Sendepixel für den Laserstrahl teil- oder volldurchlässig ausgebildet sind, eignet sich für die optische Distanzmessung zu Flächenretroreflektoren. Die Sendepixel, die im Strahlengang des Laserstrahls angeordnet sind und teil- oder volldurchlässig ausgebildet sind, können eine Formungsblende für den Laserstrahl bilden.

Eine Formungsblende ist charakterisiert durch ihren Flächeninhalt und ihre Abmessungen. Die Blendengeometrie der Formungsblende bestimmt, ob der geformte Laserstrahl einen Öffnungswinkel oder mehrere Öffnungswinkel aufweist. Formungsblenden mit einer quadratischen Blendengeometrie sind durch die Seitenlänge des Quadrats definiert und erzeugen Laserstrahlen, die einen kreisförmigen Strahlquerschnitt mit einem in Umfangsrichtung konstanten Öffnungswinkel aufweisen. Formungsblenden mit einer rechteckigen Blendengeometrie sind durch die kurze und lange Rechteckseite definiert und erzeugen Laserstrahlen, die einen elliptischen Strahlquerschnitt mit einem in Umfangsrichtung variierenden Öffnungswinkel aufweisen, wobei der Öffnungswinkel des elliptischen Laserstrahls in Umfangsrichtung zwischen einem maximalen Öffnungswinkel auf der großen Halbachse und einem minimalen Öffnungswinkel auf der kleinen Halbachse des elliptischen Strahlquerschnitts variiert. Formungsblenden mit einer beliebigen Blendengeometrie erzeugen hinter der Formungsblende Laserstrahlen mit mehreren Öffnungswinkeln, die zwischen einem minimalen Öffnungswinkel und einem maximalen Öffnungswinkel liegen.

Besonders bevorzugt bilden die teil- oder volldurchlässigen Sendepixel des ersten Arrays eine Formungsblende, wobei die Formungsblende den Laserstrahl in einen geformten Laserstrahl mit einem oder mehreren Öffnungswinkeln umformt und die Öffnungswinkel kleiner als ein maximaler Grenzwinkel von 0,3 mrad sind. Der maximale Grenzwinkel von 0,3 mrad für die Öffnungswinkel des Laserstrahls ist für die Distanzmessung zu Flächenretroreflektoren definiert und lässt sich in eine minimale Abmessung für die Formungsblende umrechnen. Der maximale Grenzwinkel von 0,3 mrad stellt sicher, dass bei der Distanzmessung zu Flächenretroreflektoren eine Homogenisierung des Laserstrahls erfolgt und keine starke Aufweitung des Laserstrahls, wie sie für die Distanzmessung zu Einzelretroreflektoren vorgesehen ist.

In einer bevorzugten Ausführung sind in der ersten Steuereinheit mindestens eine voreingestellte erste Sendepixelanordnung und mindestens eine voreingestellte zweite Sendepixelanordnung vorgesehen. Eine erfindungsgemäße Vorrichtung, die mindestens eine voreingestellte erste Sendepixelanordnung und mindestens eine voreingestellte zweite Sendepixelanordnung aufweist, eignet sich für die optische Distanzmessung zu Einzelretroreflektoren und Flächenretroreflektoren. Die voreingestellte erste Sendepixelanordnung ist für die Distanzmessung zu Einzelretroreflektoren und die voreingestellte zweite Sendepixelanordnung für die Distanzmessung zu Flächenretroreflektoren ausgelegt. Die Verwendung mehrerer voreingestellter Sendepixelanordnungen des ersten Arrays ermöglicht die Anpassung des Laserstrahlformungselementes an unterschiedliche Entfernungsbereiche, in denen ein reflektierendes Zielobjekt angeordnet ist, an unterschiedliche Typen von reflektierenden Zielobjekten (Einzelretroreflektor oder Flächenretroreflektor) und an unterschiedliche Größen von reflektierenden Zielobjekten. Für die Distanzmessung zu Einzelretroreflektoren ist der minimale Grenzwinkel von 1,0 mrad definiert und für die Distanzmessung zu Flächenretroreflektoren der maximale Grenzwinkel von 0,3 mrad. Für beide Typen von reflektierenden Zielobjekten gilt, dass der Öffnungswinkel des Laserstrahls mit zunehmender Entfernung abnehmen sollte, d.h. im Nahbereich sind große Öffnungswinkel vorteilhaft und in großen Entfernungen kleine Öffnungswinkel. Die Öffnungswinkel sind bei Einzelretroreflektoren nach unten durch den minimalen Grenzwinkel von 1,0 mrad begrenzt und bei Flächenretroreflektoren nach oben durch den maximalen Grenzwinkel von 0,3 mrad.

In einer bevorzugten Weiterentwicklung der erfindungsgemäßen Vorrichtung ist ein Empfangsstrahlformungselement, das in den Strahlengang des Empfangsstrahls anordbar ist und das als Empfangsblendenanordnung mit einem zweiten Array von Empfangspixeln ausgebildet ist, vorgesehen, wobei die Empfangspixel mittels einer zweiten Steuereinheit zwischen einem für den Empfangsstrahl undurchlässigen Empfangszustand und einem für den Empfangsstrahl zumindest teildurchlässigen Empfangszustand schaltbar sind. Ein, als Empfangsblendenanordnung mit einem zweiten Array von schaltbaren Empfangspixeln ausgebildetes, Empfangsstrahlformungselement eignet sich für die optische Distanzmessung zu Einzelretroreflektoren und zu Flächenretroreflektoren. Die Verwendung eines Empfangsstrahlformungselementes mit einem zweiten Array von Empfangspixeln ermöglicht die Anpassung des Empfangsstrahls an die Entfernung zum reflektierenden Zielobjekt, den Typ des reflektierenden Zielobjektes (Einzelretroreflektor oder Flächenretroreflektor) und die Größe des reflektierenden Zielobjektes. Die Empfangspixel sind unabhängig voneinander zwischen einem undurchlässigen Empfangszustand und einem zumindest teildurchlässigen Empfangszustand schaltbar, wobei sich die Durchlässigkeit der Empfangspixel auf den Wellenlängenbereich um die Wellenlänge der Strahlquelle bezieht. Die Durchlässigkeit der Empfangspixel wird über den Transmissionsgrad angegeben, der als Verhältnis der durchgelassenen Strahlungsleistung zur auftreffenden Strahlungsleistung definiert ist.

Die bei reflektierenden Zielobjekten (Einzelretroreflektor oder Flächenretroreflektor) erforderliche Reduzierung der Strahlungsleistung des auftreffenden Empfangsstrahls kann über die Empfangsblendenanordnung mit dem zweiten Array von Empfangspixeln erfolgen. Die Strahlungsleistung des Empfangsstrahls kann über die Empfangsfläche der Empfangsblendenanordnung und über die Durchlässigkeit der Empfangsblenden eingestellt werden. Die Empfangsfläche einer Empfangsblendenanordnung ist im Allgemeinen als Summe aus den einzelnen Flächeninhalten der Empfangsblenden definiert. Wenn die Empfangsblenden die gleichen Abmessungen aufweisen, kann die Empfangsfläche auch als Produkt aus der Anzahl der Empfangsblenden und dem Flächeninhalt der Empfangsblenden berechnet werden. Je kleiner das Verhältnis der Empfangsfläche zur Querschnittsfläche des Empfangsstrahls unmittelbar vor der Empfangsblendenanordnung ist, umso kleiner ist die Strahlungsleistung des Empfangsstrahls. Die Dämpfung des Empfangsstrahls über eine Begrenzung der Empfangsfläche ist unabhängig von der Wellenlänge der Strahlquelle, so dass auch Fremdlicht, beispielsweise in Form von Sonnenlicht mit einem breiten Wellenlängenspektrum, gedämpft wird. Die Dämpfung von Fremdlicht erfolgt ohne zusätzlichen apparativen Aufwand.

Besonders bevorzugt sind die Empfangspixel zwischen einem für den Empfangsstrahl undurchlässigen Empfangszustand, einem für den Empfangsstrahl teildurchlässigen Empfangszustand und einem für den Empfangsstrahl volldurchlässigen Empfangszustand schaltbar. Die Empfangspixel des zweiten Arrays sind unabhängig voneinander zwischen drei Empfangszuständen (undurchlässig, teildurchlässig und volldurchlässig) schaltbar, wobei sich die Durchlässigkeit der Empfangspixel auf den Wellenlängenbereich um die Wellenlänge der Strahlquelle bezieht. Die Durchlässigkeit der Empfangspixel des zweiten Arrays wird wie die Durchlässigkeit der Sendepixel des ersten Arrays über den Transmissionsgrad angegeben. Ein undurchlässiges Empfangspixel weist einen Transmissionsgrad kleiner als 10 % auf, ein volldurchlässiges Empfangspixel einen Transmissionsgrad grösser als 90 % und ein teildurchlässiges Empfangspixel einen Transmissionsgrad zwischen 10 % und 90 %. Dabei ist der Transmissionsgrad der Empfangspixel in mehreren diskreten Stufen oder stufenlos zwischen 0 % und 100 % einstellbar. Ein in mehreren diskreten Stufen einstellbarer Transmissionsgrad hat den Vorteil einer schnellen Einstellbarkeit des Transmissionsgrads und eines geringen Elektronikaufwands gegenüber einem stufenlos einstellbaren Transmissionsgrad. Ein stufenlos einstellbarer Transmissionsgrad hat den Vorteil, dass die Durchlässigkeit der Empfangspixel sehr genau einstellbar ist.

Die Durchlässigkeit der Empfangspixel (undurchlässig, teildurchlässig und volldurchlässig) bezieht sich auf den Wellenlängenbereich um die Wellenlänge der Strahlquelle und die angegebenen Transmissionsgrade zwischen 0 % und 100 % gelten für Empfangsstrahlen, die die Wellenlänge der Strahlquelle aufweisen. Neben dem Wellenlängenbereich um die Wellenlänge der Strahlquelle können weitere Wellenlängenbereiche gedämpft werden. Vorteilhaft ist die Verwendung von breitbandigen optischen Filtern, die einen breiten Wellenlängenbereich dämpfen. Die Verwendung von breitbandigen optischen Filtern zur Dämpfung des Empfangsstrahls hat den Vorteil, dass neben dem Empfangsstrahl auch Fremdlicht, wie beispielsweise Sonnenlicht mit einem breiten Wellenlängenspektrum, ohne zusätzlichen Aufwand gedämpft wird.

Besonders bevorzugt ist in der zweiten Steuereinheit mindestens eine voreingestellte Empfangspixelanordnung des zweiten Arrays vorgesehen, wobei in der Empfangspixelanordnung ein Empfangspixel oder mehrere benachbarte Empfangspixel des zweiten Arrays für den Empfangsstrahl eine Empfangsblende bilden. Die bei reflektierenden Zielobjekten (Einzelretroreflektor oder Flächenretroreflektor) erforderliche Reduzierung der Strahlungsleistung des auftreffenden Empfangsstrahls kann über die Empfangsblende erfolgen. Dabei kann die Strahlungsleistung des Empfangsstrahls über den Flächeninhalt der Empfangsblende und über die Durchlässigkeit der Empfangsblende eingestellt werden. Die Dämpfung des Empfangsstrahls über eine Begrenzung des Flächeninhalts der Empfangsblende ist unabhängig von der Wellenlänge der Strahlquelle, so dass Fremdlicht ohne zusätzlichen apparativen Aufwand gedämpft wird.

Besonders bevorzugt weist das zweite Array mehrere Empfangsblenden auf, die voneinander beabstandet sind. Die Verwendung mehrerer Empfangsblenden, die über den Strahlquerschnitt des Empfangsstrahls verteilt angeordnet sind, führt zu einer Homogenisierung des Empfangsstrahls. Eine Homogenisierung eignet sich vor allem für Empfangsstrahlen, die eine inhomogene Verteilung der Strahlungsleistung über den Strahlquerschnitt aufweisen.

Die Empfangsfläche kann über die Anzahl der Empfangsblenden und den Flächeninhalt der Empfangsblenden angepasst werden.

Besonders bevorzugt sind in der zweiten Steuereinheit mehrere voreingestellte Empfangspixelanordnungen des zweiten Arrays vorgesehen, die sich zumindest teilweise im Transmissionsgrad der Empfangspixel voneinander unterscheiden. Die Verwendung mehrerer voreingestellter Empfangspixelanordnungen des zweiten Arrays ermöglicht die Anpassung des Empfangsstrahlformungselementes an unterschiedliche Entfernungsbereiche, in denen ein reflektierendes Zielobjekt angeordnet ist, an unterschiedliche Typen von reflektierenden Zielobjekten (Einzelretroreflektor oder Flächenretroreflektor) und unterschiedliche Größen von reflektierenden Zielobjekten. Die Anpassung des Empfangsstrahlformungselementes an den Entfernungsbereich, den Typ und die Größe eines reflektierenden Zielobjektes kann über die Abmessungen der Empfangsblenden und die Empfangsfläche erfolgen.

In einer bevorzugten Weiterentwicklung der erfindungsgemäßen Vorrichtung sind das erste Array von Sendepixeln und das zweite Array von Empfangspixeln in einem gemeinsamen, von der ersten und zweiten Steuereinheit steuerbaren Lichtmodulator angeordnet. Dabei weist der Lichtmodulator beispielsweise einen inneren Sendebereich und einen äußeren Empfangsbereich auf, wobei der innere Sendebereich das erste Array von Sendepixeln und der äußere Empfangsbereich das zweite Array von Empfangspixeln umfasst. Ein Lichtmodulator mit einem inneren Sendebereich und einem äußeren Empfangsbereich eignet sich für Distanzmesseinrichtungen, die eine koaxiale Anordnung von Laserstrahl und Empfangsstrahl aufweisen.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Vorrichtung zur optischen Distanzmessung zu reflektierenden Zielobjekten bestehend aus einer Distanzmesseinrichtung und einer Anpasseinrichtung mit Laser- und Empfangsstrahlformungselementen;
- FIGN. 2A, B: die optische Distanzmessung zu einem Einzelretroreflektor mit Hilfe der in FIG. 1 dargestellten Vorrichtung, die eine erste Blendenanordnung mit einer Sendeblende (FIG. 2A) oder eine erste Blendenanordnung mit mehreren Sendeblende (FIG. 2B) umfasst;
- FIG. 3: die optische Distanzmessung zu einem Flächenretroreflektor mit Hilfe der in FIG. 1 dargestellten Vorrichtung;
- FIG. 4: eine Ausführungsform der Anpasseinrichtung, die als Lichtmodulator mit einem ersten Array von mehreren Sendepixeln und einem zweiten Array von mehreren Empfangspixeln ausgebildet ist;
- FIGN. 5A, B: zwei voreingestellte erste Sendepixelanordnungen eines alternativen ersten Arrays von 25 Sendepixeln für die Distanzmessung zu Einzelretroreflektoren in verschiedenen Entfernungsbereichen zum Zielobjekt;
- FIGN. 6A, B: zwei voreingestellte zweite Sendepixelanordnungen des ersten Arrays von 25 Sendepixeln für die Distanzmessung zu Flächenretroreflektoren in verschiedenen Entfernungsbereichen zum Zielobjekt;
- FIGN. 7A-C: drei voreingestellte erste Sendepixelanordnungen eines ersten Arrays von 17 Sendepixeln für die Distanzmessung zu Einzelretroreflektoren in drei verschiedenen Entfernungsbereichen zum Zielobjekt; und
- FIGN. 8A, B: zwei voreingestellte Empfangspixelanordnungen des zweiten Arrays von Empfangspixel der FIG. 4 für die optische Distanzmessung in verschiedenen Entfernungsbereichen zum Zielobjekt.

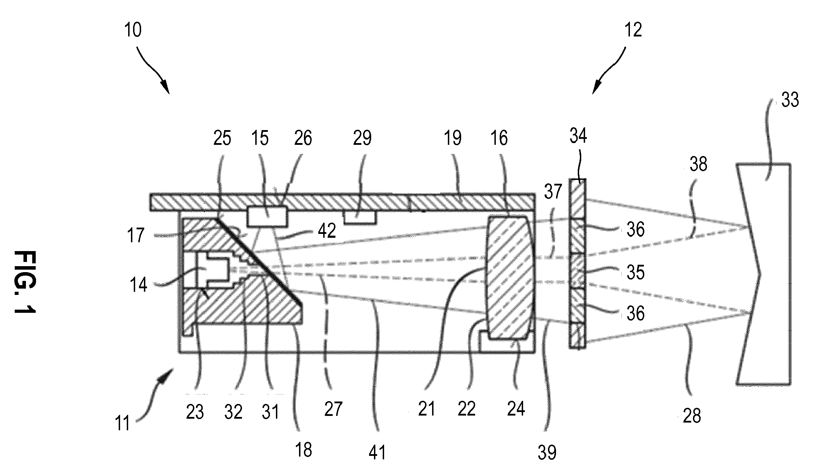

**FIG. 1** zeigt eine erfindungsgemäße Vorrichtung **10** zur optischen Distanzmessung zu einem Zielobjekt bestehend aus einer Distanzmesseinrichtung **11** und einer Anpasseinrichtung **12**, die außerhalb der Distanzmesseinrichtung 11 angeordnet ist. Bei Zielobjekten werden reflektierende Zielobjekte, bei denen ein auftreffender Laserstrahl überwiegend reflektiert wird, und streuende Zielobjekte, bei denen ein auftreffender Laserstrahl überwiegend gestreut wird, unterschieden.

Bei den reflektierenden Zielobjekten wird zusätzlich zwischen Einzelretroreflektoren und Flächenretroreflektoren unterschieden. Als Einzelretroreflektoren sind reflektierende Zielobjekte definiert, die aus einem Tripelprisma bestehen, wobei die Abmessungen des Prismas grösser als die typischen Laserstrahldurchmesser sind und ein auftreffender Laserstrahl eine Fläche des Tripelprismas erfasst. Beispiele für Einzelretroreflektoren sind Tripelprismen mit Durchmessern von 25 mm oder 50 mm. Als Flächenretroreflektoren sind reflektierende Zielobjekte definiert, die aus einer Mehrzahl von Prismen bestehen, die in einer ebenen Fläche nebeneinander angeordnet sind, wobei die Abmessungen der Prismen kleiner als die typischen Laserstrahldurchmesser sind und ein auftreffender Laserstrahl mehrere Prismen erfasst. Beispiele für Flächenretroreflektoren sind Reflexionsfolien und Katzenaugen. Katzenaugen sind im Rahmen der vorliegenden Anmeldung Flächenretroreflektoren, bei denen das Verhältnis der Größe der Prismen zum Laserstrahldurchmesser zwischen 0,1 und 1,0 liegt, und Reflexionsfolien sind Flächenretroreflektoren, bei denen das Verhältnis der Größe der Prismen zum Laserstrahldurchmesser kleiner als 0,1 ist.

Die Distanzmesseinrichtung 11 umfasst eine, als Strahlquelle **14** ausgebildete, erste elektro-optische Komponente, eine, als Detektor **15** ausgebildete, zweite elektro-optische Komponente, ein Strahlformungssystem **16**, eine Strahlteilungsoptik **17**, einen Optikträger **18** und eine Leiterplatte **19**. Das Strahlformungssystem 16 umfasst eine Sendeoptik **21** zur Strahlformung des Laserstrahls und eine Empfangsoptik **22** zur Strahlformung des Empfangsstrahls, die in eine gemeinsame Strahlformungsoptik integriert sind. Die Strahlquelle 14, die Strahlformungsoptik 16 und die Strahlteilungsoptik 17 sind am Optikträger 18 befestigt und der Detektor 15 ist an der Leiterplatte 19 befestigt. Der Optikträger 18 weist im Ausführungsbeispiel eine erste Aufnahme **23** für die Strahlquelle 14, eine zweite Aufnahme **24** für die Strahlformungsoptik 16 und eine dritte Aufnahme **25** für die Strahlteilungsoptik 17 auf. Der Detektor 15 ist auf der Leiterplatte 19 in einer weiteren Aufnahme **26** befestigt.

Die Strahlquelle 14 ist als Laserdiode ausgebildet, die einen sichtbaren oder infraroten Laserstrahl **27** erzeugt. Der Detektor 15 ist als Fotodiode ausgebildet, die einen vom Zielobjekt reflektierten und/oder gestreuten Empfangsstrahl **28** empfängt. Die Strahlteilungsoptik 17 trennt den Laserstrahl vom koaxial verlaufenden Empfangsstrahl, sie ist im Strahlengang des Laserstrahls zwischen der Strahlquelle 14 und der Strahlformungsoptik 16 und im Strahlengang des Empfangsstrahls zwischen der Strahlformungsoptik 16 und dem Detektor 15 angeordnet. Die Strahlteilungsoptik 17 kann beispielsweise als Polarisationsstrahlteiler, als Lochspiegel oder sonstiges strahlteilendes optisches Element ausgebildet sein. Eine Steuer- und Auswerteeinrichtung **29** ist mit der Strahlquelle 14 und dem Detektor 15 verbunden und bestimmt aus einer Zeitdifferenz zwischen einem Referenzstrahl und dem Empfangsstrahl die Distanz zum Zielobjekt.

Im Strahlengang des Laserstrahls 27 ist zwischen der Strahlquelle 14 und der Strahlteilungsoptik 17 eine Blende **31** angeordnet, die in den monolithischen Optikträger 18 integriert ist. Die Blende 31 dient dazu, den Öffnungswinkel der Strahlquelle 14 zu begrenzen und die Geometrie des Laserstrahls 27 an die Strahlteilungsoptik 17 und die Strahlformungsoptik 16 anzupassen. Zwischen der Strahlquelle 14 und der Blende 31 ist eine Lichtfalle **32** angeordnet, die wie die Blende 31 in den monolithischen Optikträger 18 integriert ist. Die Lichtfalle 32 dient dazu, auftreffendes Licht zu absorbieren und unerwünschte Reflektionen zu verhindern. Dazu ist die Lichtfalle 32 auf der Innenseite mit einer reflexarmen, absorbierenden Beschichtung versehen. Durch die Blende 31 und die Lichtfalle 32 werden optisches und elektrisches Übersprechen von der Strahlquelle 14 zum Detektor 15 sowie störende Artefakte im Laserstrahl reduziert.

Als Zielobjekt wird im Ausführungsbeispiel der FIG. 1 ein als Einzelretroreflektor **33** ausgebildetes reflektierendes Zielobjekt verwendet, das sich in kurzer Entfernung zur Distanzmesseinrichtung 11 befindet. Die Anpasseinrichtung 12 umfasst einen Lichtmodulator **34** mit einem Laserstrahlformungselement **35** und einem Empfangsstrahlformungselement **36**. Das Laserstrahlformungselement 35 umfasst ein erstes Array mit mehreren Sendepixeln und das Empfangsstrahlformungselement 36 umfasst ein zweites Array mit mehreren Empfangspixeln. Die Sendepixel bilden einen inneren Sendebereich und die Empfangspixel einen äußeren Empfangsbereich des Lichtmodulators 34.

Die Strahlquelle 14 sendet den Laserstrahl 27 aus, der auf die Strahlteilungsoptik 17 gerichtet ist. An der Strahlteilungsoptik 17 wird ein größtmöglicher Teil des Laserstrahls 27 transmittiert und trifft auf die Sendeoptik 21, an der eine erste Strahlformung erfolgt. Die erste Sendeoptik 21 ist als Kollimationslinse ausgebildet, die den Laserstrahl 27 kollimiert und als kollimierten Laserstrahl **37** auf das Laserstrahlformungselement 35 richtet. Die optischen Eigenschaften der Kollimationslinse 21 sind an die Distanzmessung von streuenden Zielobjekten angepasst. Der kollimierte Laserstrahl 37 trifft auf das Laserstrahlformungselement 35, an dem die Strahlformung und Dämpfung des kollimierten Laserstrahls 37 erfolgt. Der geformte Laserstrahl **38** trifft auf das reflektierende Zielobjekt 33.

Der am Zielobjekt 33 reflektierte Empfangsstrahl 28 trifft auf das Empfangsstrahlformungselement 36, das den Empfangsstrahl 28 formt, dämpft und als geformten Empfangsstrahl **39** auf die Empfangsoptik 22 richtet. An der Empfangsoptik 22 erfolgt eine weitere Strahlformung des geformten Empfangsstrahls 39. Der zweifach geformte Empfangsstrahl **41** wird auf die Strahlteilungsoptik 17 gerichtet und an der Strahlteilungsoptik 17 umgelenkt. Der umgelenkte Empfangsstrahl **42** trifft auf den Detektor 15. Die Strahlteilungsoptik 17 sorgt dafür, dass die optische Achse des umgelenkten Empfangsstrahls 42 und die optische Achse des ausgesandten Laserstrahls 27 voneinander verschieden sind.

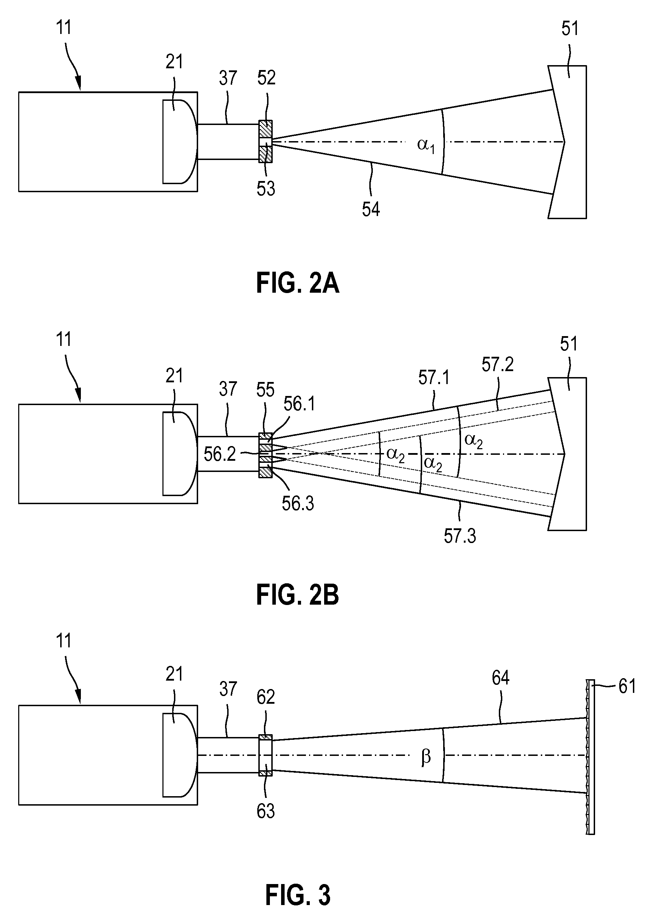

**FIGN. 2A****, B** zeigen schematisch die optische Distanzmessung zu einem Einzelretroreflektor **51** mit Hilfe der in FIG. 1 dargestellten Vorrichtung 10. Die Anpassung des Laserstrahls an den Einzelretroreflektor 51 erfolgt mittels eines Laserstrahlformungselementes, das als Sendeblendenanordnung mit einer Sendeblende (FIG. 2A) oder als Sendeblendenanordnung mit mehreren Sendeblenden (FIG. 2B) ausgebildet ist.

Die Distanzmesseinrichtung 11 erzeugt mit Hilfe der Sendeoptik 35 den kollimierten Laserstrahl 51. Im Strahlengang des kollimierten Laserstrahls 51 ist ein erstes Laserstrahlformungselement **52** angeordnet, das für die Distanzmessung zu Einzelretroreflektoren ausgelegt ist. Bei Einzelretroreflektoren sollte das Zentrum des Retroreflektors vom Laserstrahl getroffen werden, damit der reflektierte Empfangsstrahl in jedem Fall auf die Empfangsoptik auftrifft und vom Detektor erfasst wird. Trifft der Laserstrahl nicht auf das Zentrum des Retroreflektors, kann der reflektierte Empfangsstrahl durch Parallelversatz die Empfangsoptik verfehlen. Um die Genauigkeit zu reduzieren, mit der der Laserstrahl auf den Einzelretroreflektor ausgerichtet werden muss, wird der Laserstrahl aufgeweitet.

Das erste Laserstrahlformungselement 52 ist als erste Sendeblendenanordnung mit einer ersten Sendeblende **53** ausgebildet. Die erste Sendeblende 53 weist eine kreisförmige Blendengeometrie mit einem Kreisradius (halber Kreisdurchmesser) auf. Die erste Sendeblende 53 erzeugt einen Teilstrahl **54** und weitet den Teilstrahl 54 auf einen ersten Öffnungswinkel α₁ auf, der grösser als ein minimaler Grenzwinkel αₘᵢₙ von 1,0 mrad ist. Der erste Öffnungswinkel α₁ des Teilstrahls 54 kann über den Kreisradius der ersten Sendeblende 53 eingestellt werden; je kleiner der Kreisradius der ersten Sendeblende 53 ist, umso grösser ist der erste Öffnungswinkel α₁ des Teilstrahls 54. Die erste Sendeblende 53 führt ausserdem dazu, dass die Strahlungsleistung des Laserstrahls stark reduziert wird.

Eine Sendeblende ist charakterisiert durch ihren Flächeninhalt und ihre Abmessungen. Der minimale Grenzwinkel αₘᵢₙ von 1,0 mrad lässt sich in eine maximale Abmessung für die Sendeblende umrechnen, die von der Sendeblende nicht unterschritten werden darf. Die Blendengeometrie der Sendeblende bestimmt, ob der Teilstrahl einen Öffnungswinkel oder mehrere Öffnungswinkel aufweist. Sendeblenden mit einer kreisförmigen oder quadratischen Blendengeometrie sind durch eine Abmessung (Kreisradius, Seitenlänge des Quadrats) definiert und erzeugen hinter der Sendeblende Teilstrahlen, die einen kreisförmigen Strahlquerschnitt mit einem in Umfangsrichtung konstanten Öffnungswinkel aufweisen. Sendeblenden mit einer elliptischen oder rechteckigen Blendengeometrie sind durch zwei Abmessungen definiert und erzeugen hinter der Sendeblende Teilstrahlen, die einen elliptischen Strahlquerschnitt mit einem in Umfangsrichtung variierenden Öffnungswinkel aufweisen, wobei der Öffnungswinkel in Umfangsrichtung zwischen einem maximalen Öffnungswinkel auf der großen Halbachse und einem minimalen Öffnungswinkel auf der kleinen Halbachse des elliptischen Strahlquerschnitts variiert. Sendeblenden mit einer beliebigen Blendengeometrie erzeugen hinter der Sendeblende Teilstrahlen mit mehreren Öffnungswinkeln, die zwischen einem minimalen Öffnungswinkel und einem maximalen Öffnungswinkel liegen.

Hinter der ersten Sendeblende 53 weist der Teilstrahl 54 zunächst einen kleinen Strahldurchmesser auf, was im Nahbereich eine genaue Ausrichtung des Teilstrahls 54 auf den Einzelretroreflektor 51 erforderlich machen würde. Um die erforderliche Genauigkeit, mit der der Teilstrahl 54 auf den Einzelretroreflektor 51 ausgerichtet werden muss, zu reduzieren, kann das in FIG. 2B dargestellte zweite Laserstrahlformungselement **55** eingesetzt werden. Das zweite Laserstrahlformungselement 55 ist als zweite Sendeblendenanordnung mit mehreren zweiten Sendeblenden **56.1, 56.2, 56.3** ausgebildet. Die zweiten Sendeblenden 56.1-56.3 erzeugen jeweils einen Teilstrahl **57.1, 57.2, 57.3** und weiten die Teilstrahlen 57.1-57.3 auf einen zweiten Öffnungswinkel α₂ auf, der grösser als der minimale Grenzwinkel αₘᵢₙ von 1,0 mrad ist. Als Anordnung der zweiten Sendeblenden 56.1-56.3 eignen sich beispielsweise eine zentrale zweite Sendeblende, die koaxial zur optischen Achse des kollimierten Laserstrahls 37 angeordnet ist, und eine ringförmige Verteilung weiterer zweiter Sendeblenden um die zentrale zweite Sendeblende. Der zweite Öffnungswinkel α₂ der Teilstrahlen kann über den Kreisradius der zweiten Sendeblenden 56.1-56.3 eingestellt werden; je kleiner der Kreisradius der zweiten Sendeblenden 56.1-56.3 ist, umso grösser ist der zweite Öffnungswinkel α₂ der Teilstrahlen.

Die Strahlungsleistung des Laserstrahls hinter der Sendeblendenanordnung kann über die Sendefläche der Sendeblendenanordnung und über die Durchlässigkeit der Sendeblenden angepasst werden. Die Sendefläche einer Sendeblendenanordnung ist im Allgemeinen als Summe aus den einzelnen Flächeninhalten der Sendeblenden definiert. Wenn die Sendeblenden die gleichen Abmessungen aufweisen, kann die Sendefläche auch als Produkt aus der Anzahl der Sendeblenden und dem Flächeninhalt der Sendeblenden berechnet werden. Je kleiner das Verhältnis der Sendefläche zur Querschnittsfläche des Laserstrahls unmittelbar vor der Sendeblendenanordnung ist, umso kleiner ist die Strahlungsleistung des transmittierten Anteils des Laserstrahls hinter der Sendeblendenanordnung.

**FIG. 3** zeigt schematisch die optische Distanzmessung an einem Flächenretroreflektor **61** mit Hilfe der in FIG. 1 dargestellten Vorrichtung 10. Die Distanzmesseinrichtung 11 erzeugt mit Hilfe der Sendeoptik den kollimierten Laserstrahl 37. Im Strahlengang des kollimierten Laserstrahls 37 ist ein Laserstrahlformungselement **62** angeordnet, das für die Distanzmessung an Flächenretroreflektoren ausgelegt ist.

Das Laserstrahlformungselement 62 weist eine Formungsblende **63** mit einer kreisförmigen Blendengeometrie auf, die den auftreffenden Laserstrahl in einen geformten Laserstrahl **64** mit einem Öffnungswinkel β umformt, wobei der Öffnungswinkel β des geformten Laserstrahls 64 kleiner als ein maximaler Grenzwinkel βₘₐₓ von 0,3 mrad ist. Der Öffnungswinkel β des geformten Laserstrahls 64 kann über den Kreisradius der Formungsblende 63 eingestellt werden; je grösser der Kreisradius der Formungsblende 63 ist, umso kleiner ist der Öffnungswinkel β des geformten Laserstrahls 64.

Eine Formungsblende ist charakterisiert durch ihren Flächeninhalt und ihre Abmessungen. Der maximale Grenzwinkel βₘₐₓ von 0,3 mrad lässt sich in eine minimale Abmessung für die Formungsblende umrechnen, die von der Formungsblende nicht unterschritten werden darf. Die Blendengeometrie der Formungsblende bestimmt, ob der geformte Laserstrahl einen Öffnungswinkel oder mehrere Öffnungswinkel aufweist. Formungsblenden mit einer kreisförmigen oder quadratischen Blendengeometrie sind durch eine Abmessung (Kreisradius, Seitenlänge des Quadrats) definiert und erzeugen Laserstrahlen, die einen kreisförmigen Strahlquerschnitt mit einem in Umfangsrichtung konstanten Öffnungswinkel aufweisen. Formungsblenden mit einer elliptischen oder rechteckigen Blendengeometrie sind durch zwei Abmessungen definiert und erzeugen Laserstrahlen, die einen elliptischen Strahlquerschnitt mit einem in Umfangsrichtung variierenden Öffnungswinkel aufweisen, wobei der Öffnungswinkel des elliptischen Laserstrahls in Umfangsrichtung zwischen einem maximalen Öffnungswinkel auf der großen Halbachse und einem minimalen Öffnungswinkel auf der kleinen Halbachse des elliptischen Strahlquerschnitts variiert. Formungsblenden mit einer beliebigen Blendengeometrie erzeugen hinter der Formungsblende Laserstrahlen mit mehreren Öffnungswinkeln, die zwischen einem minimalen Öffnungswinkel und einem maximalen Öffnungswinkel liegen.

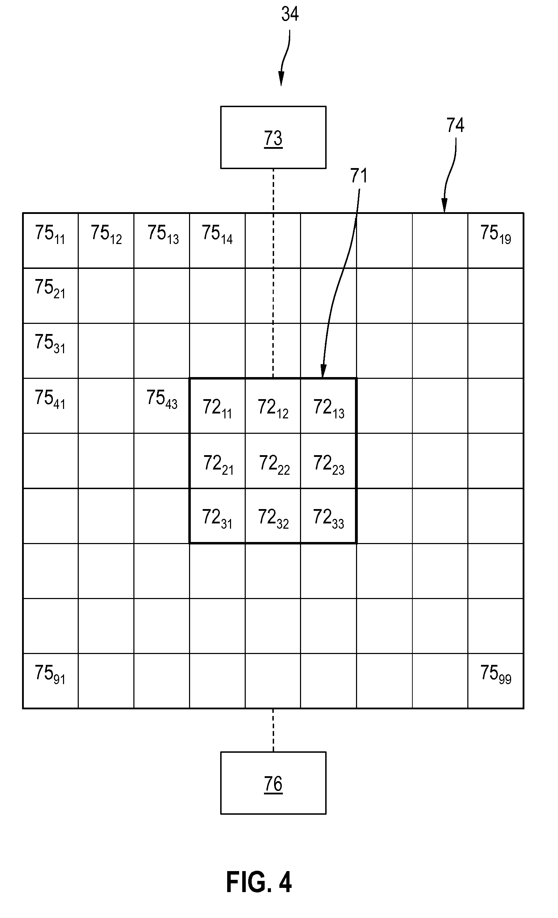

**FIG. 4** zeigt den Lichtmodulator 34 der FIG. 1 mit dem Laserstrahlformungselement 35 und dem Empfangsstrahlformungselement 36 im Detail. Dabei bildet das Laserstrahlformungselement 35 einen inneren Sendebereich und das Empfangsstrahlformungselement 36 einen äußeren Empfangsbereich des Lichtmodulators 34.

Das Laserstrahlformungselement 35 ist als Sendeblendenanordnung mit einem ersten Array **71** von neun Sendepixeln **72ᵢⱼ** mit i, j = 1, 2, 3 ausgebildet, die in drei Reihen und drei Spalten angeordnet sind. Die Position eines Sendepixels 72ᵢⱼ im ersten Array 71 ist über einen ersten Index i, der die Reihe im ersten Array 71 angibt, und einen zweiten Index j, der die Spalte im ersten Array 71 angibt, festgelegt. Die Sendepixel 72ᵢⱼ sind mittels einer ersten Steuereinheit **73** zwischen einem, für den Laserstrahl undurchlässigen, ersten Sendezustand, einem, für den Laserstrahl teildurchlässigen, zweiten Sendezustand und einem, für den Laserstrahl volldurchlässigen, dritten Sendezustand schaltbar. Dabei wird die Durchlässigkeit der Sendepixel 72ᵢⱼ über einen Transmissionsgrad **TSᵢⱼ** angegeben, der als Verhältnis von transmittierter Strahlungsleistung zu einfallender Strahlungsleistung des Laserstrahls definiert ist.

Die Transmissionsgrade TSᵢⱼ, i, j = 1, 2, 3 der Sendepixel 72ᵢⱼ sind mittels der ersten Steuereinheit 73 für jedes Sendepixel 72ᵢⱼ unabhängig einstellbar. Im ersten Sendezustand eines Sendepixels 72ᵢⱼ ist der Transmissionsgrad TSᵢⱼ kleiner als 10 % (TSᵢⱼ < 10 %) und das Sendepixel 72ᵢⱼ ist für den Laserstrahl undurchlässig ausgebildet. Im zweiten Sendezustand eines Sendepixels 72ᵢⱼ liegt der Transmissionsgrad TSᵢⱼ zwischen 10 % und 90 % (10 % ≤ TSᵢⱼ ≤ 90 %) und das Sendepixel 72ᵢⱼ ist für den Laserstrahl teildurchlässig ausgebildet. Im dritten Sendezustand eines Sendepixels 72ᵢⱼ ist der Transmissionsgrad TSᵢⱼ grösser als 90 % (90 % < TSᵢⱼ) und das Sendepixel 72ᵢⱼ ist für den Laserstrahl volldurchlässig ausgebildet.

Das Empfangsstrahlformungselement 36 ist als Empfangsblendenanordnung mit einem zweiten Array **74** von 72 Empfangspixeln **75ₖₗ** mit k, I = 1 bis 9 ausgebildet, die in neun Reihen und neun Spalten angeordnet sind. Die Empfangspixel 75ₖₗ mit k, I = 4, 5, 6 sind nicht als Empfangspixel ausgebildet, sondern von den neun Sendepixeln 72ᵢⱼ des ersten Arrays 71 belegt. Die Empfangspixel 75ₖₗ sind mittels einer zweiten Steuereinheit **76** zwischen einem, für den Empfangsstrahl undurchlässigen, ersten Empfangszustand, einem, für den Empfangsstrahl teildurchlässigen, zweiten Empfangszustand und einem, für den Empfangsstrahl volldurchlässigen, dritten Empfangszustand verstellbar. Die Durchlässigkeit der Empfangspixel 75ₖₗ des zweiten Arrays 74 wird analog zu den Sendepixeln 72ᵢⱼ des ersten Arrays 71 über einen Transmissionsgrad **TEₖₗ** angegeben, der als Verhältnis von transmittierter Strahlungsleistung zu einfallender Strahlungsleistung des Empfangsstrahls definiert ist.

Die Transmissionsgrade TEₖₗ, k, I = 1 bis 9 der Empfangspixel 75ₖₗ sind mittels der zweiten Steuereinheit 76 für jedes Empfangspixel 75ₖₗ unabhängig einstellbar. Im ersten Empfangszustand eines Empfangspixels 75ₖₗ ist der Transmissionsgrad TEₖₗ kleiner als 10 % (TEₖₗ < 10 %) und das Empfangspixel 75ₖₗ ist für den Empfangsstrahl undurchlässig ausgebildet. Im zweiten Empfangszustand eines Empfangspixels 75ₖₗ liegt der Transmissionsgrad TEₖₗ zwischen 10 % und 90 % (10 % ≤ TEₖₗ ≤ 90 %) und das Empfangspixel 75ₖₗ ist für den Empfangsstrahl teildurchlässig ausgebildet. Im dritten Empfangszustand eines Empfangspixels 75ₖₗ ist der Transmissionsgrad TEₖₗ grösser als 90 % (90 % < TEₖₗ) und das Empfangspixel 75ₖₗ ist für den Empfangsstrahl volldurchlässig ausgebildet.

Die Durchlässigkeit der Sende- und Empfangspixel (undurchlässig, teildurchlässig und volldurchlässig) bezieht sich auf den Wellenlängenbereich um die Wellenlänge der Strahlquelle und die angegebenen Transmissionsgrade TSᵢⱼ und TEₖₗ zwischen 0 % und 100 % gelten für Laser- und Empfangsstrahlen, die die Wellenlänge der Strahlquelle aufweisen. Neben dem Wellenlängenbereich um die Wellenlänge der Strahlquelle können weitere Wellenlängenbereiche gedämpft werden. Vorteilhaft ist die Verwendung von breitbandigen optischen Filtern, die einen breiten Wellenlängenbereich dämpfen, vor allem für das Empfangsstrahlformungselement 36. Die Verwendung von breitbandigen optischen Filtern zur Dämpfung des Empfangsstrahls hat den Vorteil, dass neben dem Empfangsstrahl auch Fremdlicht, wie beispielsweise Sonnenlicht mit einem breiten Wellenlängenspektrum, ohne zusätzlichen Aufwand gedämpft wird.

Die erforderliche Größe des Laserstrahlformungselementes 35 ist im Wesentlichen durch den Strahlquerschnitt des kollimierten Laserstrahles 37 festgelegt. Im Ausführungsbeispiel der FIG. 2 umfasst das erste Array 71 neun Sendepixel 72ᵢⱼ, die in einem 3x3 Array angeordnet sind. Die Sendepixel 72ᵢⱼ sind quadratisch ausgebildet und weisen die gleiche Größe auf. Alternativ können die Sendepixel 72ᵢⱼ eine andere Form aufweisen oder sich in der Größe voneinander unterscheiden, beispielsweise können die Sendepixel sechseckig ausgebildet sein oder im Bereich der optischen Achse eine kleinere Größe aufweisen als Sendepixel, die von der optischen Achse weiter beabstandet sind. Je grösser die Anzahl der Sendepixel ist, umso kleiner ist die Pixelfläche der einzelnen Sendepixel und umso detaillierter kann die Strahlformung des kollimierten Laserstrahles 37 erfolgen.

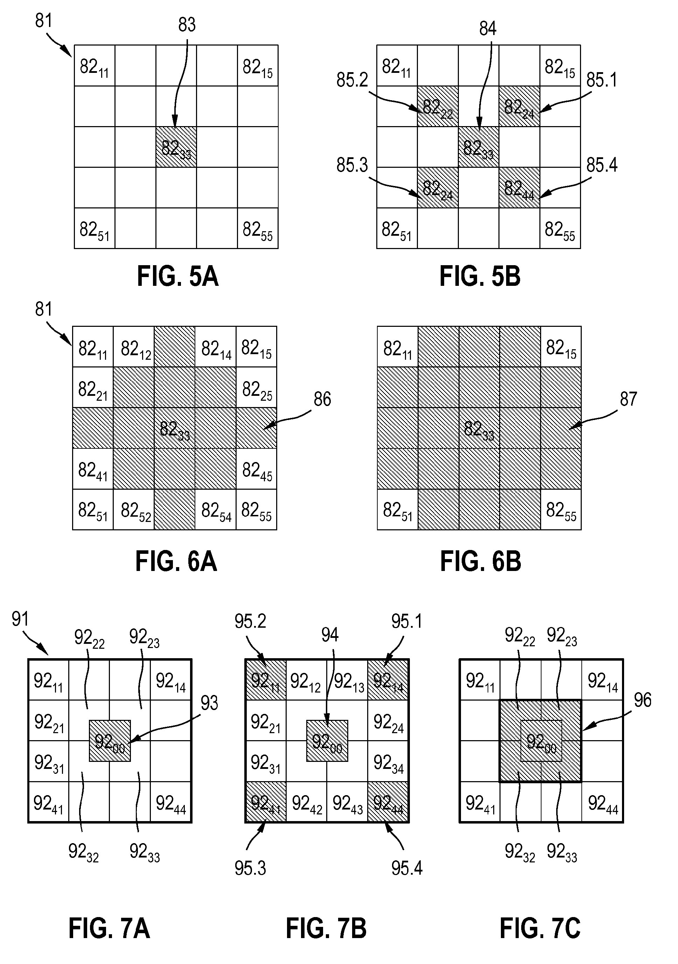

**FIGN. 5A****, B** zeigen zwei voreingestellte erste Sendepixelanordnungen eines ersten Arrays **81** von 25 Sendepixeln **82ᵢⱼ** mit i, j = 1 bis 5, die in fünf Reihen und fünf Spalten angeordnet sind, für die Distanzmessung zu Einzelretroreflektoren. Dabei ist die, in FIG. 5A dargestellte erste Sendepixelanordnung für Distanzmessungen in einem ersten Entfernungsbereich vorgesehen und die, in FIG. 5B dargestellte, erste Sendepixelanordnung ist für Distanzmessungen in einem zweiten Entfernungsbereich vorgesehen.

Das erste Array 81 kann das erste Array 71 des Lichtmodulators 34 ersetzen. Die ersten Arrays 71, 81 unterscheiden sich in der Anzahl der Sendepixel und/oder in den Abmessungen der Sendepixel. Die Funktionsweise der ersten Arrays 71, 81 ist ansonsten gleich. Die Sendepixel 82ᵢⱼ des ersten Arrays 81 sind mittels der ersten Steuereinheit 73 zwischen dem undurchlässigen ersten Sendezustand, dem teildurchlässigen zweiten Sendezustand und dem volldurchlässigen dritten Sendezustand schaltbar. Dabei sind die Transmissionsgrade TSᵢⱼ der Sendepixel 82ᵢⱼ unabhängig voneinander einstellbar. Die Position eines Sendepixels 82ᵢⱼ im ersten Array 81 ist über einen ersten Index i, der die Reihe im ersten Array 81 angibt, und einen zweiten Index j, der die Spalte im ersten Array 81 angibt, festgelegt.

Bei der in FIG. 5A dargestellten ersten Sendepixelanordnung ist das Sendepixel 82₃₃ für den Laserstrahl volldurchlässig geschaltet und die übrigen 24 Sendepixel sind für den Laserstrahl undurchlässig geschaltet. Das Sendepixel 82₃₃ bildet für den Laserstrahl eine Sendeblende **83**, die einen Teilstrahl erzeugt und den Teilstrahl auf einen Öffnungswinkel α₁ aufweitet, der nicht kleiner als ein minimaler Grenzwinkel αₘᵢₙ von 1,0 mrad ist. Die Sendeblende 83 weist eine quadratische Blendengeometrie auf und erzeugt hinter der Sendeblende 83 einen Teilstrahl mit einem kreisförmigen Strahlquerschnitt und dem in Umfangsrichtung konstanten Öffnungswinkel α₁.

Bei der in FIG. 5B dargestellten ersten Sendepixelanordnung sind die Sendepixel 82₂₂, 82₂₄, 82₃₃, 82₄₂, 82₄₄ für den Laserstrahl volldurchlässig geschaltet und die übrigen 20 Sendepixel sind für den Laserstrahl undurchlässig geschaltet. Die fünf Sendepixel 82₃₃, 82₂₂, 82₂₄, 82₄₂, 82₄₄ bilden fünf Sendeblenden **84, 85.1, 85.2, 85.3, 85.4,** die fünf Teilstrahlen erzeugen und die Teilstrahlen jeweils auf einen Öffnungswinkel α₂ aufweiten, der nicht kleiner als der minimale Grenzwinkel αₘᵢₙ von 1,0 mrad ist. Die Sendeblende 84 bildet eine zentrale Sendeblende und die weiteren Sendeblenden 85.1-85.4 sind um die zentrale Sendeblende 84 angeordnet. Die Sendeblenden 84, 85.1-85.4 weisen eine quadratische Blendengeometrie auf und erzeugen hinter den Sendeblenden 84, 85.1-85.4 Teilstrahlen mit einem kreisförmigen Strahlquerschnitt und dem in Umfangsrichtung konstanten Öffnungswinkel α₂. Da die Abmessungen der Sendeblenden 84, 85.1-85.4 gleich sind, stimmen die Öffnungswinkel α₂ der Teilstrahlen überein.

**FIGN. 6A****, B** zeigen zwei voreingestellte zweite Sendepixelanordnungen der 25 Sendepixel 82ᵢⱼ mit i, j = 1 bis 5 des ersten Arrays 81 für die Distanzmessung zu Flächenretroreflektoren. Dabei ist die, in FIG. 6A dargestellte zweite Sendepixelanordnung für Distanzmessungen in einem ersten Entfernungsbereich vorgesehen und die, in FIG. 6B dargestellte, zweite Sendepixelanordnung ist für Distanzmessungen in einem zweiten Entfernungsbereich vorgesehen.

Bei der in FIG. 6A dargestellten zweiten Sendepixelanordnung sind die Sendepixel 82₁₁, 82₁₂, 82₁₄, 82₁₅, 82₂₁, 82₂₅, 82₄₁, 82₄₅, 82₅₁, 82₅₂, 82₅₄, 82₅₅ für den Laserstrahl undurchlässig geschaltet und die Sendepixel 82₁₃, 82₂₂, 82₂₃, 82₂₄, 82₃₁, 82₃₂, 82₃₃, 82₃₄, 82₃₅, 82₄₂, 82₄₃, 82₄₄, 82₅₃ sind für den Laserstrahl volldurchlässig geschaltet. Die volldurchlässig geschalteten Sendepixel bilden für den Laserstrahl eine Formungsblende **86**, die den auftreffenden Laserstrahl homogenisiert und in einen geformten Laserstrahl mit mehreren Öffnungswinkeln β₁, die kleiner als der maximale Grenzwinkel βₘₐₓ von 0,3 mrad sind, umformt.

Das Sendepixel 82₃₃ bildet den Mittelpunkt der Formungsblende 86 und das erste Array 81 wird so positioniert, dass die optische Achse des kollimierten Laserstrahls 37 mit dem Mittelpunkt der Formungsblende 86 zusammenfällt. Die Abmessungen der Formungsblende 86 ausgehend vom Mittelpunkt 82₃₃ in die positive und negative horizontale Richtung (entlang der Reihen des Arrays 81) und in die positive und negative vertikale Richtung (entlang der Spalten des Arrays 81) stimmen überein. Die Blendengeometrie der Formungsblende 86 bestimmt, ob der geformte Laserstrahl einen Öffnungswinkel oder mehrere Öffnungswinkel aufweist. Eine Formungsblende mit einer quadratischen Blendengeometrie erzeugt einen Laserstrahl mit einem kreisförmigen Strahlquerschnitt und einem in Umfangsrichtung des Laserstrahls konstanten Öffnungswinkel. Die Formungsblende 86, die sich aus den 13 quadratischen Sendepixeln 82₁₃, 82₂₂, 82₂₃, 82₂₄, 82₃₁, 82₃₂, 82₃₃, 82₃₄, 82₃₅, 82₄₂, 82₄₃, 82₄₄, 82₅₃ zusammensetzt, weicht von der idealen quadratischen Blendengeometrie ab und erzeugt hinter der Formungsblende 86 einen Laserstrahl mit mehreren Öffnungswinkeln. Dabei sind sämtliche Öffnungswinkel β₁ des geformten Laserstrahls kleiner als der maximale Grenzwinkel βₘₐₓ von 0,3 mrad.

Bei der in FIG. 6B dargestellten zweiten Sendepixelanordnung sind die Sendepixel 82₁₁, 82₁₅, 82₅₁, 82₅₅ für den Laserstrahl undurchlässig geschaltet und die übrigen 21 Sendepixel 82₁₂, 82₁₃, 82₁₄, 82₂₁, 82₂₂, 82₂₃, 82₂₄, 82₂₅, 82₃₁, 82₃₂, 82₃₃, 82₃₄, 82₃₅, 82₄₁, 82₄₂, 82₄₃, 82₄₄, 82₄₅, 82₅₂, 82₅₃, 82₅₄ sind für den Laserstrahl volldurchlässig geschaltet. Die volldurchlässig geschalteten Sendepixel bilden für den Laserstrahl eine Formungsblende **87**, die den auftreffenden Laserstrahl homogenisiert und in einen geformten Laserstrahl mit mehreren Öffnungswinkeln β₂, die kleiner als der maximale Grenzwinkel βₘₐₓ von 0,3 mrad sind, umformt.

**FIGN. 7A-C** zeigen drei voreingestellte erste Sendepixelanordnungen eines ersten Arrays **91** von 17 Sendepixeln **92ᵢⱼ** mit i, j = 0 und i, j = 1 bis 4 für die Distanzmessung zu Einzelretroreflektoren in drei verschiedenen Entfernungsbereichen.

Das Sendepixel 92₀₀ ist als zentrales Sendepixel von vier nicht-quadratischen Sendepixeln 92ᵢⱼ mit i, j = 2, 3 umgeben, wobei die vier nicht-quadratischen Sendepixel einen viereckigen Ring bilden. Die vier nicht-quadratischen Sendepixel 92₂₂, 92₂₃, 92₃₂, 92₃₃ sind von 12 Sendepixeln 92ᵢⱼ mit i = 1, 4 und j = 1 bis 4 sowie i = 2, 3 und j = 1, 4 umgeben. Das erste Array 91 kann das erste Array 71 des Lichtmodulators 34 ersetzen. Die ersten Arrays 71, 91 unterscheiden sich in der Anzahl der Sendepixel, in den Abmessungen der Sendepixel und/oder in der Geometrie der Sendepixel; die Funktionsweise der ersten Arrays 71, 91 ist ansonsten gleich.

Bei der in FIG. 7A dargestellten Sendepixelanordnung ist das zentrale Sendepixel 92₀₀ für den Laserstrahl voll- oder teildurchlässig (TSᵢⱼ ≥ 10 %) geschaltet und die übrigen 16 Sendepixel sind für den Laserstrahl undurchlässig (TSᵢⱼ < 10 %) geschaltet. Das zentrale Sendepixel 92₀₀ bildet für den Laserstrahl eine Sendeblende **93**, die einen Teilstrahl erzeugt und den Teilstrahl auf einen Öffnungswinkel α₁ aufweitet, der nicht kleiner als ein minimaler Grenzwinkel αₘᵢₙ von 1,0 mrad ist.

Bei der in FIG. 7B dargestellten Sendepixelanordnung sind das zentrale Sendepixel 92₀₀ und die vier, in den Ecken des quadratischen Arrays 81 angeordneten, Sendepixel 92ᵢⱼ mit i, j = 1, 4 für den Laserstrahl voll- oder teildurchlässig (TSᵢⱼ ≥ 10 %) geschaltet und die übrigen 12 Sendepixel sind für den Laserstrahl undurchlässig (TSᵢⱼ < 10 %) geschaltet. Die fünf Sendepixel 92₀₀, 92₁₁, 92₁₄, 92₄₄, 92₄₁ bilden fünf Sendeblenden **94, 95.1, 95.2, 95.3, 95.4,** die fünf Teilstrahlen erzeugen und die Teilstrahlen jeweils auf den Öffnungswinkel α₁ aufweiten, der nicht kleiner als der minimale Grenzwinkel αₘᵢₙ von 1,0 mrad ist. Da die Abmessungen der Sendeblenden 94, 95.1-95.4 gleich sind, stimmen die Öffnungswinkel α₁ der Teilstrahlen überein.

Bei der in FIG. 7C dargestellten Sendepixelanordnung sind das zentrale Sendepixel 92₀₀ und die vier nicht-quadratischen Sendepixel 92ᵢⱼ mit i, j = 2, 3 für den Laserstrahl voll- oder teildurchlässig (TSᵢⱼ ≥ 10 %) geschaltet und die übrigen 12 Sendepixel sind für den Laserstrahl undurchlässig (TSᵢⱼ < 10 %) geschaltet. Die fünf Sendepixel 92₀₀, 92₂₂, 92₂₃, 92₃₂, 92₃₃ bilden eine Sendeblende **96**, die einen Teilstrahl erzeugt und den Teilstrahl auf einen Öffnungswinkel α₂ aufweitet, der nicht kleiner als der minimale Grenzwinkel αₘᵢₙ von 1,0 mrad ist. Die Abmessungen der Sendeblende 96 sind doppelt so gross wie die Abmessungen der Sendeblende 93 bei der in FIG. 7A dargestellten Sendepixelanordnung und der Öffnungswinkel α₂, den die Sendeblende 96 erzeugt, ist kleiner als der Öffnungswinkel α₁, den die Sendeblende 93 erzeugt.

Die Blendengeometrie der Sendeblenden 93, 94, 95.1-95.4, 96 bestimmt, ob die Teilstrahlen einen Öffnungswinkel oder mehrere Öffnungswinkel aufweisen. Das Sendepixel 92₀₀ bildet den Mittelpunkt der Sendeblenden 93, 94, 96 und das erste Array 91 wird so positioniert, dass die optische Achse des kollimierten Laserstrahls 37 mit dem Mittelpunkt der Sendeblenden 93, 94, 96 zusammenfällt. Die Sendeblenden 93, 94, 95.1-95.4, 96 weisen eine quadratische Blendengeometrie auf und erzeugen hinter den Sendeblenden Teilstrahlen, die einen kreisförmigen Strahlquerschnitt mit einem in Umfangsrichtung konstanten Öffnungswinkel aufweisen.

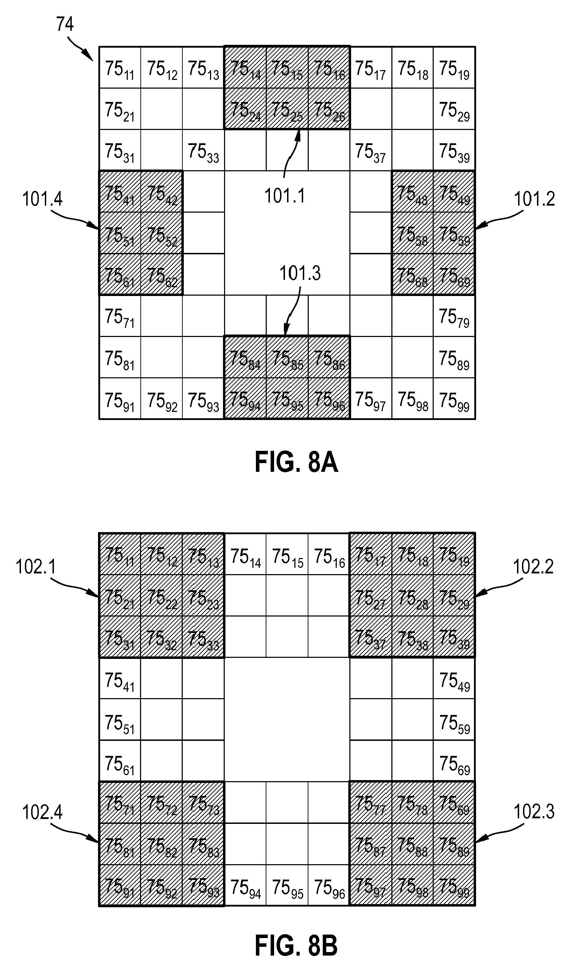

**FIGN. 8A****, B** zeigen zwei voreingestellte Empfangspixelanordnungen für das in FIG. 4 dargestellte zwei Array 74 von Empfangspixeln 75ₖₗ. Die Empfangspixel 75ₖₗ sind mittels der zweiten Steuereinheit 76 zwischen einem undurchlässigen Empfangszustand (TEₖₗ < 10 %), einem teildurchlässigen Empfangszustand (10 % ≤ TEₖₗ ≤ 90 %) und einem volldurchlässigen Empfangszustand (90 % < TEₖₗ) schaltbar. Die Transmissionsgrade TEₖₗ können sich auf den Wellenlängenbereich um die Wellenlänge der Strahlquelle 14 oder einen breiten Wellenlängenbereich, der die Wellenlänge der Strahlquelle 14 enthält, beziehen.

Bei der in FIG. 8A dargestellten Empfangspixelanordnung bilden jeweils sechs benachbarte Empfangspixel eine Empfangsblende für den Empfangsstrahl. Die Empfangspixel 75ₖₗ, i = 1, 2 und j = 4 bis 6 bilden eine erste Empfangsblende **101.1**, die Empfangspixel 75ₖₗ, i = 4 bis 6 und j = 8, 9 bilden eine zweite Empfangsblende **101.2**, die Empfangspixel 75ₖₗ, i = 8, 9 und j = 4 bis 6 bilden eine dritte Empfangsblende **101.3** und die Empfangspixel 75ₖₗ, i = 4 bis 6 und j = 1, 2 bilden eine vierte Empfangsblende **101.4**.

Bei der in FIG. 8B dargestellten Empfangspixelanordnung bilden jeweils neun benachbarte Empfangspixel, die in drei Reihen und drei Spalten angeordnet sind, eine Empfangsblende für den Empfangsstrahl. Die Empfangspixel 75ₖₗ, i, j = 1 bis 3 bilden eine erste Empfangsblende **102.1**, die Empfangspixel 75ₖₗ, i = 1 bis 3 und j = 7 bis 9 bilden eine zweite Empfangsblende **102.2**, die Empfangspixel 75ₖₗ, i = j = 7 bis 9 bilden eine dritte Empfangsblende **102.3** und die Empfangspixel 75ₖₗ, i = 7 bis 9 und j = 1 bis 3 bilden eine vierte Empfangsblende **102.4**.

Die Empfangspixel 75ₖₗ der Empfangsblenden 101.1-101.4, 102.1-102.4 können volldurchlässig (90 % < TEₖₗ) oder teildurchlässig (10 % ≤ TEₖₗ ≤ 90 %) geschaltet sein. Über den Transmissionsgrad TEₖₗ der Empfangspixel 75ₖₗ kann die Strahlungsleistung des Empfangsstrahls angepasst werden. Je kleiner der Transmissionsgrad TEₖₗ eingestellt wird, umso geringer ist die Strahlungsleistung des Empfangsstrahls, die auf den Detektor 15 auftrifft. Dabei ist der Transmissionsgrad der Empfangspixel 75ₖₗ in mehreren diskreten Stufen oder stufenlos zwischen 0 % und 100 % einstellbar. Ein in mehreren diskreten Stufen einstellbarer Transmissionsgrad hat den Vorteil einer schnellen Einstellbarkeit des Transmissionsgrads und eines geringen Elektronikaufwands gegenüber einem stufenlos einstellbaren Transmissionsgrad. Ein stufenlos einstellbarer Transmissionsgrad TEₖₗ hat den Vorteil, dass die Durchlässigkeit der Empfangspixel 75ₖₗ sehr genau einstellbar ist.

## Patentansprüche

1. Vorrichtung (10) zur optischen Distanzmessung zu einem reflektierenden Zielobjekt (33; 51, 61), aufweisend:
▪ eine Strahlquelle (14), die als elektro-optische Komponente ausgebildet ist und einen Laserstrahl (27) aussendet,
▪ einen Detektor (15), der als weitere elektro-optische Komponente ausgebildet ist und einen am Zielobjekt reflektierten oder gestreuten Empfangsstrahl (28) empfängt,
▪ ein Strahlformungssystem (16) mit einer Sendeoptik (21), die den Laserstrahl (27) formt, und einer Empfangsoptik (22), die den Empfangsstrahl (28) formt, und
▪ ein Laserstrahlformungselement (35), das in den Strahlengang des Laserstrahls (27) anordbar ist,
**dadurch gekennzeichnet, dass** das Laserstrahlformungselement (35) als Sendeblendenanordnung mit einem ersten Array (71; 81; 91) von Sendepixeln (72ᵢⱼ, i, j = 1 bis 3; 82ᵢⱼ, i, j = 1 bis 5; 92ᵢⱼ, i, j = 0 und i, j = 1 bis 4) ausgebildet ist, wobei die Sendepixel (72ᵢⱼ; 82ᵢⱼ; 92ᵢⱼ) mittels einer ersten Steuereinheit (73) zwischen einem für den Laserstrahl (27) undurchlässigen Sendezustand (TSᵢⱼ < 10 %) und einem für den Laserstrahl (27) zumindest teildurchlässigen Sendezustand (10 % ≤ TSᵢⱼ ≤ 100 %) schaltbar sind.

2. Vorrichtung nach Anspruch 1, **dadurch gekennzeichnet, dass** die Sendepixel (72ᵢⱼ; 82ᵢⱼ; 92ᵢⱼ) zwischen einem für den Laserstrahl (27) undurchlässigen Sendezustand (TSᵢⱼ < 10 %), einem für den Laserstrahl (27) teildurchlässigen Sendezustand (10 % ≤ TSᵢⱼ ≤ 90 %) und einem für den Laserstrahl (27) volldurchlässigen Sendezustand (90 % < TSᵢⱼ) schaltbar sind.

3. Vorrichtung nach einem der Ansprüche 1 bis 2, **dadurch gekennzeichnet, dass** in der ersten Steuereinheit (73) mindestens eine voreingestellte erste Sendepixelanordnung des ersten Arrays (71; 81; 91) vorgesehen ist, wobei in der ersten Sendepixelanordnung mindestens 50 % der Sendepixel (72ᵢⱼ; 82ᵢⱼ; 92ᵢⱼ) des ersten Arrays (71; 81; 91), die im Strahlengang des Laserstrahls (27) angeordnet sind, für den Laserstrahl (27) undurchlässig (TSᵢⱼ < 10 %) ausgebildet sind.

4. Vorrichtung nach Anspruch 3, **dadurch gekennzeichnet, dass** ein Sendepixel (82₃₃; 92₀₀) oder mehrere benachbarte Sendepixel (92₀₀, 92₂₂, 92₂₃, 92₃₂, 92₃₃) des ersten Arrays (81; 91) für den Laserstrahl (27) eine Sendeblende (83; 93, 96) bilden, wobei die Sendeblende (83; 93, 96) einen Teilstrahl erzeugt und den Teilstrahl auf einen oder mehrere Öffnungswinkel (α₁, α₂) aufweitet, die nicht kleiner als ein minimaler Grenzwinkel (αₘᵢₙ) von 1,0 mrad sind.

5. Vorrichtung nach Anspruch 4, **dadurch gekennzeichnet, dass** das erste Array (81; 91) mehrere Sendeblenden (84, 85.1, 85.2, 85.3, 85.4; 94, 95.1, 95.2, 95.3, 95.4) aufweist, wobei die Sendeblenden (84, 85.1, 85.2, 85.3, 85.4; 94, 95.1, 95.2, 95.3, 95.4) mehrere Teilstrahlen erzeugen und die Teilstrahlen jeweils auf einen oder mehrere Öffnungswinkel (α₁) aufweiten, die nicht kleiner als der minimale Grenzwinkel (αₘᵢₙ) von 1,0 mrad sind.

6. Vorrichtung nach einem der Ansprüche 1 bis 5, **dadurch gekennzeichnet, dass** in der ersten Steuereinheit (73) mindestens eine voreingestellte zweite Sendepixelanordnung des ersten Arrays (81; 91) vorgesehen ist, wobei in der zweiten Sendepixelanordnung mindestens 50 % der Sendepixel (82ᵢⱼ, i, j = 1 bis 5; 92ᵢⱼ, i, j = 0 und i, j = 1 bis 4) des ersten Arrays (81; 91), die im Strahlengang des Laserstrahls (27) angeordnet sind, für den Laserstrahl (27) teildurchlässig (10 % ≤ TSᵢⱼ ≤ 90 %) oder volldurchlässig (90 % < TSᵢⱼ) ausgebildet sind.

7. Vorrichtung nach Anspruch 6, **dadurch gekennzeichnet, dass** die teil- oder volldurchlässigen Sendepixel (82₁₃, 82₂₂, 82₂₃, 82₂₄, 82₃₁, 82₃₂, 82₃₃, 82₃₄, 82₃₅, 82₄₂, 82₄₃, 82₄₄, 82₅₃; 82₁₂, 82₁₃, 82₁₄, 82₂₁, 82₂₂, 82₂₃, 82₂₄, 82₂₅, 82₃₁, 82₃₂, 82₃₃, 82₃₄, 82₃₅, 82₄₁, 82₄₂, 82₄₃, 82₄₄, 82₄₅, 82₅₂, 82₅₃, 82₅₄) des ersten Arrays (81) eine Formungsblende (86; 87) bilden, wobei die Formungsblende (86; 87) den Laserstrahl in einen geformten Laserstrahl mit einem oder mehreren Öffnungswinkeln (β₁, β₂) umformt und die Öffnungswinkel (β₁, β₂) kleiner als ein maximaler Grenzwinkel (βₘₐₓ) von 0,3 mrad sind.

8. Vorrichtung nach einem der Ansprüche 6 bis 7, **dadurch gekennzeichnet, dass** in der ersten Steuereinheit (73) mindestens eine voreingestellte erste Sendepixelanordnung und mindestens eine voreingestellte zweite Sendepixelanordnung vorgesehen ist.

9. Vorrichtung nach einem der Ansprüche 1 bis 8, **gekennzeichnet durch** ein Empfangsstrahlformungselement (36), das in den Strahlengang des Empfangsstrahls (28) anordbar ist und das als Empfangsblendenanordnung mit einem zweiten Array (74) von Empfangspixeln (75ₖₗ, k, I = 1 bis 9) ausgebildet ist, wobei die Empfangspixel (75ₖₗ) mittels einer zweiten Steuereinheit (76) zwischen einem für den Empfangsstrahl (28) undurchlässigen Empfangszustand (TEₖₗ < 10 %) und einem für den Empfangsstrahl (28) zumindest teildurchlässigen Empfangszustand (10 % ≤ TEₖₗ ≤ 100 %) schaltbar sind.

10. Vorrichtung nach Anspruch 9, **dadurch gekennzeichnet, dass** die Empfangspixel (75ₖₗ) zwischen einem für den Empfangsstrahl (28) undurchlässigen Empfangszustand (TEₖₗ < 10 %), einem für den Empfangsstrahl (28) teildurchlässigen Empfangszustand (10 % ≤ TEₖₗ ≤ 90 %) und einem für den Empfangsstrahl (28) volldurchlässigen Empfangszustand (90 % < TEₖₗ) schaltbar sind.

11. Vorrichtung nach einem der Ansprüche 9 bis 10, **dadurch gekennzeichnet, dass** in der zweiten Steuereinheit (76) mindestens eine voreingestellte Empfangspixelanordnung des zweiten Arrays (74) vorgesehen ist, wobei in der Empfangspixelanordnung ein Empfangspixel oder mehrere benachbarte Empfangspixel (75ₖₗ) des zweiten Arrays (74) für den Empfangsstrahl eine Empfangsblende (101.1, 101.2, 101.3, 101.4; 102.1, 102.2, 102.3, 102.4) bilden.

12. Vorrichtung nach Anspruch 11, **dadurch gekennzeichnet, dass** das zweite Array (74) mehrere Empfangsblenden (101.1, 101.2, 101.3, 101.4; 102.1, 102.2, 102.3, 102.4) aufweist, die voneinander beabstandet sind.

13. Vorrichtung nach einem der Ansprüche 11 bis 12, **dadurch gekennzeichnet, dass** in der zweiten Steuereinheit (76) mehrere voreingestellte Empfangspixelanordnungen des zweiten Arrays (74) vorgesehen sind, die sich zumindest teilweise im Transmissionsgrad (TEₖₗ) der Empfangspixel (75ₖₗ) voneinander unterscheiden.

14. Vorrichtung nach einem der Ansprüche 11 bis 14, **dadurch gekennzeichnet, dass** das erste Array (71) von Sendepixeln (72ᵢⱼ) und das zweite Array (74) von Empfangspixeln (75ₖₗ) in einem gemeinsamen Lichtmodulator (34) angeordnet sind.
